(19) Europäisches Patentamt
European Patent Office
Office européen des brevets

(11) EP 0 765 120 B1

(12) **EUROPEAN PATENT SPECIFICATION**

(45) Date of publication and mention of the grant of the patent:
**21.12.2005 Bulletin 2005/51**

(21) Application number: **95920898.4**

(22) Date of filing: **26.05.1995**

(51) Int Cl.[7]: **A01N 47/34**
// (A01N47/34, 57:14)

(86) International application number:
**PCT/EP1995/002008**

(87) International publication number:
**WO 1995/033380 (14.12.1995 Gazette 1995/53)**

(54) **Synergistic compositions comprising lufenuron and profenofos**

Lufenuron und Profenofos enthaltende synergistische Zusammensetzungen

Compositions synergiques comportant lufenuron et profenofos

(84) Designated Contracting States:
**CH ES FR IT LI NL**

(30) Priority: **08.06.1994 CH 180794**

(43) Date of publication of application:
**02.04.1997 Bulletin 1997/14**

(73) Proprietor: **Syngenta Participations AG
4058 Basel (CH)**

(72) Inventors:
- **SKILLMAN, Stephen, Wilson
CH-4343 Etzgen (CH)**
- **BUHOLZER, Franz
CH-4108 Witterswil (CH)**

(56) References cited:
**EP-A- 0 179 022** **GB-A- 2 083 360**

- **CHEMICAL PATENTS INDEX, DOCUMENTATION ABSTRACTS JOURNAL Week 9329, Derwent Publications Ltd., London, GB; AN 93-053145 & ZA,A,9 107 192 (CIBA-GEIGY) 27 May 1992**
- **PESTICIDE SCIENCE, vol.14, no.3, 1983, BARKING GB pages 246 - 254 M. A. EL-GUINDY ET AL. 'The joint action of mixtures of insecticides, or of insect growth regulators and insecticides, on susceptible and diflubenzuron-resistant strains of Spodoptera littoralis Boisd.'**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 765 120 B1

Printed by Jouve, 75001 PARIS (FR)

## Description

The present invention relates to a synergistic pesticidal composition comprising a combination of pesticides and to a method of controlling pests with said composition. The invention further relates to a process for the preparation of the novel composition, to the use thereof and to plant propagation material treated therewith, and to the use of a compound of formula (A) below for the preparation of said novel composition.

Certain mixtures of pesticides have been proposed in the literature for pest control. However, the biological properties of these known mixtures are unable to satisfy the requirements made of them in the field of pest control in all respects, so that there is still a need to provide further mixtures having synergistic properties for pest control, in particular for controlling insects and representatives of the order Acarina. This need is met by the provision of the composition of this invention.

Accordingly, the invention relates to a pesticidal composition comprising a quantitatively variable and synergistically acting combination of the pesticidally active compound of formula

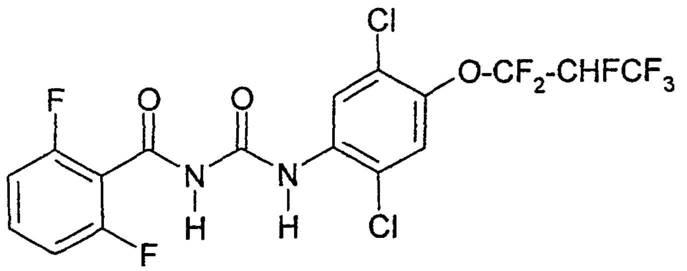

(A, lufenuron),

in the free form or in the form of an agrochemically acceptable salt thereof, and of O-4-bromo-2-chlorophenyl O-ethyl S-propyl phosphorothioate (B, profenofos); known from The Pesticide Manual, 10thEd. (1994), The British Crop Protection Council, London, page 836.

The compound 1-(2,5-dichloro-4-{1,1,2,3,3,3-hexafluoroprop-1-oxy}phenyl)-3(2,6-difluorobenzoyl)urea (lufenuron) of formula (A) is described in, inter alia, The Pesticide Manual, 10th Ed. (1994), The British Crop Protection Council, London, page 628.

The agrochemically acceptable salts of the compound of formula (A) are typically acid addition salts of inorganic and organic acids, preferably of hydrochloric acid, hydrobromic acid, sulfuric acid, nitric acid, perchloric acid, phosphoric acid, formic acid, acetic acid, trifluoroacetic acid, oxalic acid, malonic acid, toluenesulfonic acid or benzoic acid.

EP-179022 discloses the compound of the formula (A, Lufenuron). GB-2083360 describes combinations of certain Benzoylureas with compounds such as Chlorpyrifos or Diazinone, without mentioning any syngergism between the different active ingredients. ZA 9107192 describes pesticidal mixtures comprising Lufenuron in combination with Azamethiphos and Diazinon for the control of ectoparasites on cattle. Pesticide Science 14, 246-254 (1983) describes synergistic and antagonistic combinations of Dimilin with different types of other pesticides.

Preferred compositions within the scope of this invention are those that contain the compound of formula (A) in the free form as active ingredient.

The pesticidal combination of this invention will preferably contain the compound of formula (A) and Profenofos in a weight ratio of 1:50 to 50:1, especially in a ratio from 1:20 to 20:1, more particularly from 10:1 to 1:10, still more particularly from 5:1 to 1:5, very particularly from 2:1 to 1:2, first and foremost in the ratio 1:1; alternatively in the ratio 5:1, or 5:2, or 5:3, or 5:4, or 4:1, 4:3, or 3:1, or 3:2, or 2:1, or 1:5, or 2:5, or 3:5, or 4:5, or 1:4, or 3:4, or 1:3, or 2:3, or 1:2.

It has been found that a particularly effective composition is that which contains one part by weight of the compound of formula (A) and 10 parts by weight of the compound 4-bromo-2-chlorophenyl O-ethyl S-propyl phosphorothioate (profenofos). This composition is very particularly suitable for controlling representatives of the genera Earias and Heliothis.

Surprisingly, it has now been found that the combination of the pesticide of formula (A) and Profenofos not only brings about the expected additive enhancement of the activity spectrum on the pests to be controlled, but also has a synergistic effect that potentiates the activity ranges of both compounds from two points of view.

On the one hand, the concentrations of the compound of formula (A) and of Profenofos are reduced with no reduction in the activity of said compounds. On the other hand, the combination also achieves a high degree of pest control where the individual compounds are completely inactive at too low concentrations. This feature permits on the one hand a broadening of the activity spectrum against the controllable pests and, on the the other, an enhancement of safety of application.

The compositions of this invention have useful preventive and/or curative properties in the field of pest control even at low concentration. They are well tolerated by warm-blooded animals, fish and plants, and they have a very favourable biocidal spectrum. The compositions are effective against all, or individual, development stages of normally sensitive as well as resistant pests of animals such as insects and representatives of the order Acarina. The onset of the insecticidal and/or acaricidal action of the novel compositions may follow directly, i.e. a kill of the pests will occur immediately or only after some time, for example where moulting is effected, or indirectly, for example in diminished oviposition and/or hatching rate, the good activity corresponding to a mortality of at least 50 to 60%.

The aforementioned animal pests typically include: of the order Lepidoptera

Acleris spp., Adoxophyes spp., Aegeria spp., Agrotis spp., Alabama argillaceae, Amylois spp., Anticarsia gemmatalis, Archips spp., Argyrotaenia spp., Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia binotalis, Cryptophlebia leucotreta, Cydia spp., Diatraea spp., Diparopsis castanea, Earias spp., Ephestia spp., Eucosma spp., Eupoecilia ambiguella, Euproctis spp., Euxoa spp., Grapholita spp., Hedya nubiferana, Heliothis spp., Hellula andalis, Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiella, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.;

of the order Coleoptera, for example

Agriotes spp., Anthonomus spp., Atomaria linearis, Chaetocnema tibialis, Cosmopolites spp., Curculio spp., Dermestes spp., Diabrotica spp., Epilachna spp., Eremnus spp., Leptinotarsa decemlineata, Lissorhoptrus spp., Melolontha spp., Oryzaephilus spp., Otiorhynchus spp., Phlyctinus spp., Popillia spp., Psylliodes spp., Rhizopertha spp., Scarabeidae, Sitophilus spp., Sitotroga spp., Tenebrio spp., Tribolium spp. and Trogoderma spp.;

of the order Orthoptera, for example

Blatta spp., Blattella spp., Gryllotalpa spp., Leucophaea maderae, Locusta spp., Periplaneta spp. and Schistocerca spp.;

of the order Isoptera, for example

Reticulitermes spp.;

of the order Psocoptera, for example

Liposcelis spp.;

of the order Anoplura, for example

Haematopinus spp., Linognathus spp., Pediculus spp., Pemphigus spp. and Phylloxera spp.;

of the order Mallophaga, for example

Damalinea spp. and Trichodectes spp.;

of the order Thysanoptera, for example

Frankliniella spp., Hercinothrips spp., Taeniothrips spp., Thrips palmi, Thrips tabaci and Scirtothrips aurantii;

of the order Heteroptera, for example

Cimex spp., Distantiella theobroma, Dysdercus spp., Euchistus spp. Eurygaster spp. Leptocorisa spp., Nezara spp., Piesma spp., Rhodnius spp., Sahlbergella singularis, Scotinophara spp. and Triatoma spp.;

of the order Homoptera, for example

Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma lanigerum, Erythroneura spp., Gascardia spp., Laodelphax spp., Lecanium corni, Lepidosaphes spp., Macrosiphus spp., Myzus spp., Nephotettix spp., Nilaparvata spp., Paratoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri;

of the order Hymenoptera, for example

Acromyrmex, Atta spp., Cephus spp., Diprion spp., Diprionidae, Gilpinia polytoma, Hoplocampa spp., Lasius spp., Monomorium pharaonis, Neodiprion spp., Solenopsis spp. and Vespa spp.;

of the order Diptera, for example

Aedes spp., Antherigona soccata, Bibio hortulanus, Calliphora erythrocephala, Ceratitis spp., Chrysomyia spp., Culex spp., Cuterebra spp., Dacus spp., Drosophila melanogaster, Fannia spp., Gastrophilus spp., Glossina spp., Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis pomonella, Sciara spp., Stomoxys spp., Tabanus spp., Tannia spp. and Tipula spp.;

of the order Siphonaptera, for example

Ceratophyllus spp. and Xenopsylla cheopis;

of the order Thysanura, for example
Lepisma saccharina and
of the order Acarina, for example
Acarus siro, Aceria sheldoni, Aculus schlechtendali, Amblyomma spp., Argas spp., Boophilus spp., Brevipalpus spp., Bryobia praetiosa, Calipitrimerus spp., Chorioptes spp., Dermanyssus gallinae, Eotetranychus carpini, Eriophyes spp., Hyalomma spp., Ixodes spp., Olygonychus pratensis, Ornithodoros spp., Panonychus spp., Phyllocoptruta oleivora, Polyphagotarsonemus latus, Psoroptes spp., Rhipicephalus spp., Rhizoglyphus spp., Sarcoptes spp., Tarsonemus spp. and Tetranychus spp.

Within the scope of this invention it is possible to control in particular pests

(1) of the order Lepidoptera,
especially Adoxophyes spp., Alabama argillaceae, Clysia ambiguella, Clysia pomonella, Crocidolomia binotalis, Cydia spp., Earias spp., Heliothis spp., Lobesia botrana; Ostrinia nubilalis, Phthorimaea operculella, Sparganothis spp. and Spodoptera spp.;

(2) of the order Coleoptera
in particular the family Curculionidae, more particularly Anthonomus spp., more particularly still A. grandis, very particularly the family Chrysomelidae, most preferably Leptinotarsa decemlineata;

(3) of the order Homoptera
in particular the family Aphididae, more particularly the genus Aphis, most particularly A. gossypii; in particular the family Aleurodidae, preferably Aleurothrixus floccus and Bemisia tabaci; in particular Familie Psyllidae, more preferably Psylla spp.,

(4) of the order Thysanoptera, in particular the family Thripidae,
preferably Frankliniella spp., Thrips palmi and Thrips tabaci;

(5) of the order Acarina
in particular the family Eriophyidae, more particularly Aculus schlechtendali and Phyllocoptruta oleivora;

(6) of the order Diptera,
in particular the family Agromyzidae, more particularly Liriomyza trifolii.

With the novel pesticidal combinations it is possible to control, i.e. inhibit or destroy, in particular pests of the above mentioned type that occur in plants or, especially, in cultivated plants and ornamentals, in horticulture and in forestry, or in parts of such plants such as fruit, blossoms, leaves, stems, tubers or roots, while in some cases parts of plants that grow later can also be protected against these pests.

The pesticidal combination of this invention can be used with advantage for pest control in cereals such as maize or sorghum; fruit such as pomes, stone fruit and soft fruit, typically apples, pears, plums, peaches, almonds, cherries, or berries, for example strawberries, raspberries and blackberries; leguminous plants, typically including beans, lentils, peas and soybeans; oil plants such as rape, mustard, poppy, olives, sunflowers, coconut, castor oil plants, cocoa beans and groundnuts; cucurbits such as marrows, cucumber and melons; fibre plants such as cotton, flax, hemp and jute; citrus fruit such as oranges, lemons, grapefruit and mandarins; vegetables such as spinach, lettuce, asparagus, cabbages, carrots, onions, tomatoes, potatoes and paprika; lauraceae such as avocados, cinnamon and camphor; and tobacco, nuts, coffee, egg plants, sugar cane, tea, pepper, vines, hops, bananas and natural rubber plants or ornamentals; in particular in maize, sorghum, pomes, stone fruit, leguminous plants, cucurbits, cotton, citrus fruit, vegetables, egg plants, vines, hops or ornamentals; preferably in maize, sorghum, apples, pears, plums, peaches, beans, peas, soybeans, olives, sunflowers, coconuts, cocoa beans, cabbages, tomatoes, potatoes, vines or cotton; and, most preferably, in vines, citrus fruit, apples, pears, tomatoes and cotton.

Further utilities of the pesticidal combinations of this invention are the protection of stored goods and materials as well as in the hygiene sector, especially the protection of domestic animals and productive livestock against pests of the indicated type.

Depending on the intended objectives and the prevailing circumstances, the pesticidal compositions are emulsifiable concentrates, suspension concentrates, directly sprayable or dilutable solutions, coatable pastes, dilute emulsions, wettable powders, soluble powders, dispersible powders, wettable powders, dusts, granulates or encapsulations in polymer substances, comprising the compound of formula (A) and pesticide (B).

The active ingredients are used in those compositions in pure form, the solid compounds being typically used in a specific particle size, or preferably together with at least one of the adjuvants customary in formulation technology,

for example extenders such as solvents, or solid carriers, or surface-active compounds (surfactants).

Suitable solvents are typically aromatic hydrocarbons or partially hydrogenated aromatic hydrocarbons, preferably the fractions of alkylbenzenes containing 8 to 12 carbon atoms, such as xylene mixtures, alkylated naphthalenes or tetrahydronaphthalene, aliphatic or cycloaliphatic hydrocarbons such as paraffins or cyclohexane; alcohols such as ethanol, propanol or butanol; glycols and their ethers and esters such as propylene glycol, dipropylene glycol ether, diethylene glycol or 2-methoxyethanol or 2-ethoxyethanol; ketones such as cyclohexanone, isophorone or diacetone alcohol; strongly polar solvents such as N-methylpyrrolid- 2-one, dimethyl sulfoxide or N,N-dimethylformamide; water; vegetable oils or epoxidised vegetable oils such as rape oil, castor oil, coconut oil or soybean oil or epoxidised rape oil, castor oil, coconut oil or soybean oil, and silicone oils.

The solid carriers typically used for dusts and dispersible powders are usually natural mineral fillers such as calcite, talcum, kaolin, montmorillonite or attapulgite. To improve the physical properties it is also possible to add highly dispersed silicic acids or highly dispersed absorbent polymers. Suitable granulated adsorptive carriers are porous types, including pumice, broken brick, sepiolite or bentonite; and suitable nonsorbent carriers are calcite or sand. In addition, innumerable granulated materials of inorganic or organic nature may be used, especially dolomite or pulverised plant residues.

Depending on the type of compound to be formulated, suitable surface-active compounds are nonionic, cationic and/or anionic surfactants or mixtures of surfactants having good emulsifying, dispersing and wetting properties. The surfactants listed below shall be regarded merely as exemplary; many more surfactants customarily employed in formulation technology and suitable for use in the practice of the invention are described in the relevant literature.

Nonionic surfactants are preferably polyglycol ether derivatives of aliphatic or cycloaliphatic alcohols, saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols. Further suitable nonionic surfactants are water-soluble polyadducts of polyethylene oxide with polypropylene glycol, ethylenediaminopolypropylene glycol and alkylpolypropylene glycol containing 1 to 10 carbon atoms in the alkyl chain, which adducts contain 20 to 250 ethylene glycol ether groups and 10 to 100 propylene glycol ether groups. These compounds usually contain 1 to 5 ethylene glycol units per propylene glycol unit. Representative examples of nonionic surfactants are nonylphenol polyethoxyethanols, polyethoxylated castor oil, polyadducts of polypropylene and polyethylene oxide, tributylphenol polyethoxylate, polyethylene glycol and octylphenol polyethoxylate. Fatty acid esters of polyoxyethylene sorbitan, e.g. polyoxyethylene sorbitan trioleate, are also suitable nonionic surfactants.

Cationic surfactants are preferably quaternary ammonium salts carrying, as N-substituent, at least one $C_8$-$C_{22}$alkyl radical and, as further substituents, unsubstituted or halogenated lower alkyl, benzyl or hydroxy-lower alkyl radicals. The salts are preferably in the form of halides, methyl sulfates or ethyl sulfates. Examples are stearyltrimethylammonium chloride and benzyl bis(2-chloroethyl)ethylammonium bromide.

Suitable anionic surfactants may be water-soluble soaps as well as water-soluble synthetic surface-active compounds. Suitable soaps are the alkali metal salts, alkaline earth metal salts and unsubstituted or substituted ammonium salts of higher fatty acids ($C_{10}$-$C_{22}$), e.g. the sodium or potassium salts of oleic or stearic acid or of natural fatty acid mixtures which can be obtained e.g. from coconut oil or tall oil. Further suitable soaps are also the fatty acid methyl taurin salts.

More frequently, however, synthetic surfactants are used, preferably fatty sulfonates, fatty sulfates, sulfonated benzimidazole derivatives or alkylarylsulfonates. The fatty sulfonates or sulfates are usually in the form of alkali metal salts, alkaline earth metal salts or unsubstituted or substituted ammonium salts and usually contain a $C_8$-$C_{22}$alkyl radical, which also includes the alkyl moiety of acyl radicals. Typical examples are the sodium or calcium salt of ligninsulfonic acid, of dodecyl sulfate or of a mixture of fatty alcohol sulfates obtained from natural fatty acids. These compounds also comprise the salts of sulfated and sulfonated fatty alcohol/ethylene oxide adducts. The sulfonated benzimidazole derivatives preferably contain two sulfonic acid groups and one fatty acid radical containing 8 to 22 carbon atoms. Typical examples of alkylarylsulfonates are the sodium, calcium or triethanolammonium salts of dodecylbenzenesulfonic acid, dibutylnaphthalenesulfonic acid or of a condensate of naphthalenesulfonic acid and formaldehyde. Corresponding phosphates, e.g. salts of the phosphoric acid ester of an adduct of p-nonylphenol with 4 to 14 mol of ethylene oxide, or phospholipids, are also suitable.

The compositions will usually comprise 0.1 to 99%, preferably 0.1 to 95%, of a combination of the compound of formula (A) and pesticide (B), and 1 to 99.9%, preferably 5 to 99.9%, of at least one solid or liquid adjuvant; usually they will contain 0 to 25%, prefer ably 0.1 to 20%, of surfactants (in each case percentages are by weight). Whereas commercial products will preferably be formulated as concentrates, the end user will normally employ dilute formulations having a substantially lower concentration of active ingredient. Particularly preferred formulations will be made up as follows: (throughout, percentages are by weight):

| Emulsifiable concentrates | |
|---|---|
| combination of (A) and (B)<br>surfactant<br>solvent | 1 to 95 %, preferably 5 to 20 %<br>1 to 30 %, preferably 10 to 20 %<br>5 to 98 %, preferably 70 to 85 % |
| Dusts: | |
| combination of (A) and (B)<br>solid carrier | 0.1 to 10 %, preferably 0.1 to 1 %<br>99.9 to 90 %, preferably 99.9 to 99 % |
| Suspension concentrates: | |
| combination of (A) and (B)<br>water<br>surfactant | 5 to 75 %, preferably 10 to 50 %<br>94 to 24 %, preferably 88 to 30 %<br>1 to 40 %, preferably 2 to 30 % |
| Wettable powders: | |
| combination of (A) and (B)<br>surfactant<br>solid carrier | 0.5 to 90 %, preferably 1 to 80 %<br>0.5 to 20 %, preferably 1 to 15 %<br>5 to 99 %, preferably 15 to 98 % |
| Granules: | |
| combination of (A) and (B)<br>solid carrier | 0.5 to 30 %, preferably 3 to 15 %<br>99.5 to 70 %, preferably 97 to 85 % |

The novel compositions may also contain further solid or liquid adjuvants such as stabilisers, e.g. vegetable oils or epoxidised vegetable oils (e.g. epoxidised coconut oil, rapeseed oil or soybean oil), antifoams, e.g. silicone oil, preservatives, viscosity regulators, binders and/or tackifiers, as well as fertilisers or other chemical agents for obtaining special effects, typically including bactericides, fungicides, nematicides, molluscicides or herbicides.

The compositions of this invention are prepared in known manner; in the absence of adjuvants, typically by grinding, sieving and/or compressing a solid active ingredient or mixture of active ingredients, for example to a specific particle size; and in the presence of at least one adjuvant, for example by intimately mixing and/or grinding the active ingredient or mixture of active ingredients with the adjuvant or adjuvants. The invention also relates to the preparation of the compositions.

The methods of applying the compositions, i.e. the methods of controlling pests of the indicated type, typically spraying, atomising, dusting, coating, dressing, scattering or pouring, selected in accordance with the intended objectives and prevailing circumstances, and the use of the compositions for controlling pests of the indicated type, are further objects of the invention. Typical rates of concentration are in the range from 0.1 to 1000 ppm, preferably from 0.1 to 500 ppm, of active ingredient. The rate of application may vary over a wide range and will depend on the nature of soil, the type of application (foliar application, seed dressing, application to the seed furrow), the cultivated plant, the pest to be controlled, the prevailing climatic conditions and other factors governed by the type of application, time of application and target crop. The rates of application per hectare will usually be from 1 to 2000 g/ha, more particularly from 10 to 1000 g/ha, preferably from 20 to 600 g/ha.

A preferred method of application in the field of plant protection is application to the foliage of the plants (foliar application), the number of applications and the rate of application depending on the risk of infestation by the particular pest. However, the active ingredients can also penetrate the plants through the roots (systemic action) by drenching the locus of the plants with a liquid formulation or by applying the active ingredient in solid form to the locus of the plants, for example to the soil, e.g. in granular form (soil application). In paddy rice crops, such granules may be applied to the flooded rice field.

The compositions of the invention are also suitable for protecting plant propagation material, e.g. seeds such as fruit, tubers or grains, or plant cuttings, against animal pests. The propagation material can be treated with the formulation before planting. Seeds, for example, can be dressed before sowing. The compounds of the invention can also be applied to grains (coating), either by impregnating the grains with a liquid formulation or by coating them with a solid formulation. The composition can also be applied to the locus of planting when planting the propagation material, for example to the seed furrow during sowing. The invention relates also to these methods of treating plant propagation material and to the plant propagation material so treated.

The invention is illustrated by the following non-limitative Examples.

Formulation Examples (% = per cent by weight; ratios = weight ratios)

| Example F1: Emulsifiable concentrate | a) | b) | c) |
|---|---|---|---|
| combination (ratio of compound of formula (A) to a compound (B) 1:1) | 25 % | 40 % | 50 % |
| Ca dodecylbenzenesulfonate | 5 % | 8 % | 6 % |
| polyethoxylated castor oil (36 mol EO) | 5 % | - | - |
| tributylphenol polyethoxylate (30 mol EO) | - | 12 % | 4 % |
| cyclohexanone | - | 15 % | 20 % |
| xylene mixture | 65 % | 25 % | 20 % |

Emulsions of any desired concentration can be prepared from such concentrates by dilution with water.

| Example F2: Solutions | a) | b) | c) | d) |
|---|---|---|---|---|
| combination (2:1) | 80 % | 10 % | 5 % | 95 % |
| 2-methoxyethanol | 20 % | - | - | - |
| polyethylene glycol MW 400 | - | 70 % | - | - |
| N-methyl-2-pyrrolidone | - | 20 % | - | - |
| epoxidised coconut oil | - | - | 1 % | 5 % |
| petroleum spirit (boiling range 160-190°C) | - | - | 94 % | - |

The solutions are suitable for use in the form of microdrops.

| Example F3: Granulates | a) | b) | c) | d) |
|---|---|---|---|---|
| combination (1:10) | 5 % | 10 % | 8 % | 21 % |
| kaolin | 94 % | - | 79 % | 54 % |
| highly dispersed silica | 1 % | - | 13 % | 7 % |
| attapulgite | - | 90 % | - | 18 % |

The active ingredients are dissolved in dichloromethane, the solution is sprayed onto the carrier, and the solvent is subsequently evaporated in vacuo.

| Example F4: Dusts | a) | b) |
|---|---|---|
| combination (1:5) | 2 % | 5 % |
| highly dispersed silica | 1 % | 5 % |
| talcum | 97 % | - |
| kaolin | - | 90 % |

Ready-to-use dusts are obtained by intimately mixing the carriers with the active ingredients.

| Example F5: Wettable powders | a) | b) | c) |
|---|---|---|---|
| combination (1:1) | 25 % | 50 % | 75 % |
| sodium ligninsulfonate | 5 % | 5 % | - |
| sodium lauryl sulfate | 3 % | - | 5 % |
| sodium diisobutylnaphthalenesulfonate | - | 6 % | 10 % |
| octylphenol polyethoxylate (7-8 mol EO) | - | 2% | - |
| highly dispersed silica | 5 % | 10 % | 10 % |
| kaolin | 62 % | 27 % | - |

The active ingredients are mixed with the additives, and the mixture is ground thoroughly in a suitable mill. This gives wettable powders which can be diluted with water to give suspensions of any desired concentration.

| Example F6: Emulsifiable concentrate | |
|---|---|
| combination (1:1) | 10 % |
| octylphenol polyethoxylate (4-5 mol EO) | 3 % |
| calcium dodecylbenzenesulfonate | 3 % |
| polyethoxylated castor oil (36 mol EO) | 4 % |
| cyclohexanone | 30 % |
| xylene mixture | 50 % |

Emulsions of any desired concentration can be prepared from this concentrate by dilution with water.

| Example F7 : Dusts | a) | b) |
|---|---|---|
| combination (1:2) | 5 % | 8 % |
| talcum | 95 % | - |
| kaolin | - | 92 % |

Ready-to-use dusts are obtained by mixing the active ingredients with the carrier and grinding the mixture on a suitable mill.

| Example F8: Extruder granules | |
|---|---|
| combination (1:3) | 10 % |
| sodium ligninsulfonate | 2 % |
| carboxymethyl cellulose | 1 % |
| kaolin | 87 % |

The active ingredients are mixed with the additives, and the mixture is ground and moistened with water. This mixture is extruded, granulated and subsequently dried in a stream of air.

| Example F9: Coated granulates | |
|---|---|
| combination (1:1) | 3 % |
| polyethylene glycol (MW 200) | 3 % |
| kaolin | 94 % |

In a mixer, the finely ground active ingredients are applied uniformly to the polyethylene glycol, which has been moistened with kaolin, to give dust-free coated granules.

| Example F10: Suspension concentrate | |
|---|---|
| combination (2:1) | 40 % |
| ethylene glycol | 10 % |
| nonylphenol polyethoxylate (15 mol EO) | 6 % |
| sodium ligninsulfonate | 10 % |
| carboxymethyl cellulose | 1 % |
| 37% aqueous formaldehyde solution silicone oil in the form of a 75 % | 0.2 % |
| aqueous emulsion | 0.8 % |
| water | 32 % |

The finely ground active ingredients are mixed intimately with the additives to give a suspension concentrate from which suspensions of any desired concentration can be prepared by dilution with water.

It is often more expedient to formulate the compound of formula (A) and pesticide (B) singly and then to mix them in the desired ratio in the applicator as a tank mixture in water shortly before application.

Biological Examples (% = per cent by weight, unless otherwise indicated)

A synergistic effect is always obtained whenever the activity of the combination of the compound of formula (A) with pesticide (B) is greater than the sum of the activities of the individually applied compounds.

For example, the expected pesticidal activity We of a given combination of two pesticides can be calculated as follows (q.v. COLBY, S.R., "Calculating synergistic and antagonstic response of herbicide combinations", Weeds 15, pages 20-22, 1967):

$$We = \frac{Y \times (100 - X)}{100}$$

wherein

X = Percentage mortality, compared with untreated controls, after treatment with the compound of formula (A) at a rate of application of pkg/hectare (= 0 %).

Y = Percentage mortality, compared with untreated controls, after treatment with the compound (B) at a rate of application of qkg/hectare.

We = The expected pesticidal activity (percentage mortality compared with untreated controls) after treatment with the compound of formula (A) and the compound (B) at a rate of application of p + qkg a.i./ha.

If the actually observed value is lower than the expected value We, then there is synergism.

The synergistic effect of the combinations of the compound of formula (A) with the pesticide (B) is demonstrated in the following Examples.

Example B1: Action against Bemisia tabaci

Bean plants are placed in gauze cages and populated with adults of Bemisia tabaci. After oviposition, all adults are removed and 10 days later the plants with the nymphs present thereon are treated with an aqueous suspension of a spray mixture containing the active ingredient in a concentration of 50ppm. Evaluation of the hatching rate (in %) compared with untreated controls is made after a further 14 days.

In this test the combinations of the compound of formula (A) with the pesticide (B) have a synergistic effect.

Example B2: Action against Spodoptera littoralis caterpillars

Young soybean plants are sprayed with an aqueous emulsion of a spray formulation containing 400ppm of active ingredient. After the spray coating has dried, the soybean plants are populated with 10 caterpillars of Spodoptera littoralis in the 3rd stage and put into a plastic container. Evaluation is made 3 days later. The percentage reduction of the population and percentage reduction in the feeding damage (percentage kill) is determined by comparing the number of dead caterpillars and the feeding damage on the treated plants with those on the untreated plants.

In this test the combinations of the compound of formula (A) with the pesticide (B) have a synergistic effect.

Example B3: Ovicidal action against Lobesia botrana

Eggs of Lobesia botrana laid on filter paper are immersed for a brief time in an aqueous acetonic solution containing 400 ppm of the test pesticidal combination. After the test solution has dried, the eggs are incubated in petri dishes. The percentage hatching of the eggs compared with untreated controls is assessed 6 days later (percentage reduction of hatching).

In this test the combinations of the compound of formula (A) with the pesticide (B) have a synergistic effect.

Example B4: Ovicidal action against Heliothis virescens

Eggs of Heliothis virescens laid on filter paper are immersed for a brief time in an aqueous acetonic solution containing 400 ppm of the test pesticidal combination. After the test solution has dried, the eggs are incubated in petri dishes. The percentage hatching of the eggs compared with untreated controls is assessed 6 days later (percentage reduction of hatching).

In this test the combinations of the compound of formula (A) with the pesticide (B) have a synergistic effect.

**Claims**

1. An insecticidal or acaricidal composition comprising a quantitatively variable and synergistic combination of the pesticidally active compound of formula

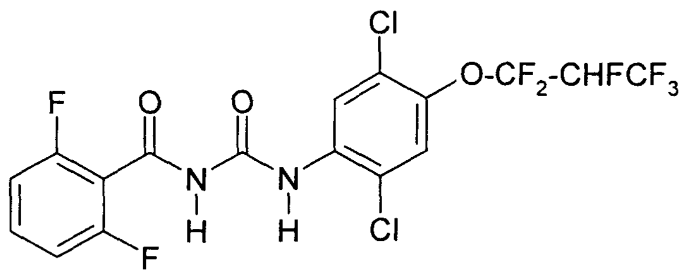

(A, lufenuron),

in the free form or in the form of an agrochemically acceptable salt thereof, and of O-4-bromo-2-chlorophenyl O-ethyl S-propyl phosphorothioate (profenofos);
and at least one adjuvant.

2. A composition according to claim 1, which contains the compound of formula (A) in the free form as active ingredient.

3. A composition according to claim 1, which comprises lufenuron and profenofos in the ratio 1:10.

4. A method of controlling pests, which comprises applying a pesticidally effective amount of a composition as claimed in any one of claims 1 to 3 to said pests or to the locus thereof.

5. A method according to claim 4, wherein the pests to be controlled are insects of the order Homoptera.

6. A method according to claim 4, wherein the pests to be controlled are insects of the order Lepidoptera.

7. A method according to claim 4, wherein the pests to be controlled are insects of the order Thysanoptera.

8. A method according to claim 4, wherein the pests to be controlled are insects of the order Acarina.

9. A method according to claim 4, wherein the pests to be controlled are insects of the order Coleoptera.

10. A method according to any one of claims 4 to 9 of controlling propagation material, which comprises treating said propagation material or the locus of planting thereof.

11. A process for the preparation of a composition as claimed in any one of claims 1 to 3, which comprises intimately mixing the active ingredients with the adjuvant or adjuvants.

12. Plant propagation material treated by the method as claimed in claim 10.

**Patentansprüche**

1. Insektizide oder akarizide Zusammensetzung, umfassend eine quantitativ variable und synergistische Kombination der pestizid wirksamen Verbindung der Formel

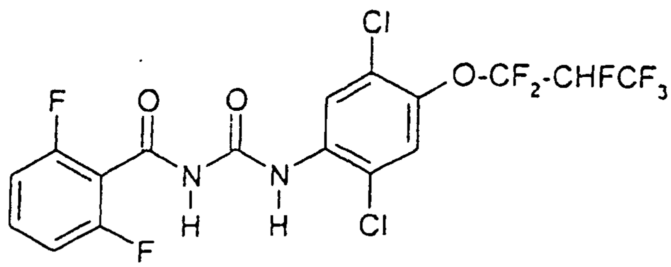

(A, Lufenuron),

in freier Form oder in Form eines agrochemisch akzeptablen Salzes davon, und von O-4-Brom-2-chlorphenyl-O-ethyl-S-propyl-phosphorthioat (Profenofos); und mindestens ein Hilfsmittel.

2. Zusammensetzung nach Anspruch 1, die die Verbindung der Formel (A) in freier Form als Wirkstoff enthält.

3. Zusammensetzung nach Anspruch 1, die Lufenuron und Profenofos in einem Verhältnis von 1 : 10 umfaßt.

4. Verfahren zur Bekämpfung von Schädlingen, das die Ausbringung einer pestizid wirksamen Menge einer Zusammensetzung nach einem der Ansprüche 1 bis 3 auf die Schädlinge oder ihren Aufenthaltsort umfaßt.

5. Verfahren nach Anspruch 4, wobei die zu bekämpfenden Schädlinge Insekten der Ordnung Homoptera sind.

6. Verfahren nach Anspruch 4, wobei die zu bekämpfenden Schädlinge Insekten der Ordnung Lepidoptera sind.

7. Verfahren nach Anspruch 4, wobei die zu bekämpfenden Schädlinge Insekten der Ordnung Thysanoptera sind.

8. Verfahren nach Anspruch 4, wobei die zu bekämpfenden Schädlinge Insekten der Ordnung Acarina sind.

9. Verfahren nach Anspruch 4, wobei die zu bekämpfenden Schädlinge Insekten der Ordnung Coleoptera sind.

10. Verfahren nach einem der Ansprüche 4 bis 9 zur Kontrolle von Fortpflanzungsmaterial, das die Behandlung des Fortpflanzungsmaterials oder seiner Anbaufläche umfaßt.

11. Verfahren zur Herstellung einer Zusammensetzung nach einem der Ansprüche 1 bis 3, das das innige Mischen der Wirkstoffe mit dem Hilfsmittel oder den Hilfsmitteln umfaßt.

12. Pflanzenfortpflanzungsmaterial, das durch das Verfahren nach Anspruch 10 behandelt wurde.

**Revendications**

1. Composition insecticide ou acaricide comprenant une association synergique et variable en quantité du composé actif en tant que pesticide de formule

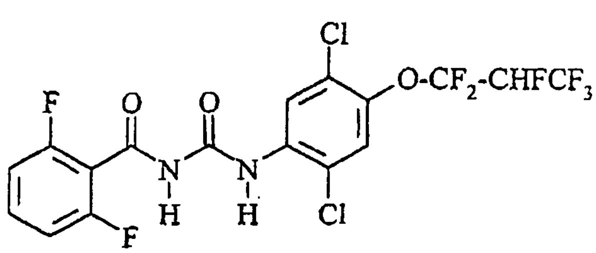

(A, lufénuron),

sous la forme libre ou sous la forme d'un de ses sels acceptables en agrochimie et
du phosphorothioate de O-4-bromo-2-chlorophényle, de O-éthyle et de S-propyle (profénofos) ;
et au moins un adjuvant.

2. Composition selon la revendication 1, qui contient le composé de formule (A) sous la forme libre en tant qu'ingrédient actif.

3. Composition selon la revendication 1, qui comprend du lufénuron et du profénofos dans le rapport 1:10.

4. Méthode de contrôle des organismes nuisibles, qui comprend l'application d'une quantité efficace du point de vue pesticide d'une composition telle que revendiquée dans l'une quelconque des revendications 1 à 3 sur lesdits organismes nuisibles ou sur leur site.

5. Méthode selon la revendication 4, dans laquelle les organismes nuisibles à contrôler sont des insectes de l'ordre des homoptères.

6. Méthode selon la revendication 4, dans laquelle les organismes nuisibles à contrôler sont des insectes de l'ordre des lépidoptères.

7. Méthode selon la revendication 4, dans laquelle les organismes nuisibles à contrôler sont des insectes de l'ordre des thysanoptères.

8. Méthode selon la revendication 4, dans laquelle les organismes nuisibles à contrôler sont des insectes de l'ordre des acariens.

9. Méthode selon la revendication 4, dans laquelle les organismes nuisibles à contrôler sont des insectes de l'ordre des coléoptères.

10. Méthode selon l'une quelconque des revendications 4 à 9 de contrôle d'un matériau de reproduction, qui comprend le traitement dudit matériau de reproduction ou de son site de plantation.

11. Procédé pour la préparation d'une composition telle que revendiquée dans l'une quelconque des revendications 1 à 3, qui comprend le mélange intime des ingrédients actifs avec l'adjuvant ou les adjuvants.

12. Matériau de reproduction des végétaux traité par la méthode telle que revendiquée dans la revendication 10.